# EUROPÄISCHE PATENTANMELDUNG

(11) **EP 2 698 752 A1**
(43) Veröffentlichungstag der Anmeldung: **19.02.2014**
(21) Anmeldenummer: 12180528.7
(22) Anmeldetag: 15.08.2012
(51) Int. Cl.: G06Q 10/08, G06Q 50/28, A22C 18/00

(54) **Verfahren zur Rückverfolgung der Herkunft von Fleischwaren**

(71) Anmelder: Vion GmbH, 40472 Düsseldorf (DE)
(72) Erfinder: Krause, Wolfram, 50668 Köln (DE); Barfuss, Norbert, 45739 Oer-Erkenschwick (DE); Heger, Freddy, 97535 Gressthal/Wasserlosen (DE); Kirchner, Dirk, 63820 Elsenfeld (DE); Lieb, Jürgen, 86807 Buchloe (DE); Pelkner, Matthias S., 82538 Geretsried (DE); Fimmel, Alexander, 63762 Grossostheim, (DE); Kölker, Johannes, 44581 Castrop-Rauxel (DE); Sticha, Martin, 67122 Altrip (DE)
(74) Vertreter: Buse, Mentzel, Ludewig Patentanwaltzkanzlei

(57) **Zusammenfassung**

Die Erfindung betrifft ein Verfahren zur Rückverfolgbarkeit der Herkunft von Fleischwaren. Hierbei weist jedes zu verarbeitende Tier (10) wenigstens ein individuelles Erkennungselement (20) mit einer individuellen Kennung (21) auf. Über diese ist das einzelne Tier (10) identifizierbar. Das Tier (10) wird dann geschlachtet, wodurch wenigstens ein Schlachtkörper (11) entsteht, der mit einer Schlachtnummer (14) versehen wird. Nach dem Schlachtvorgang wird der Schlachtkörper (11) gewogen und/oder klassifiziert, wobei das Erkennungselement (20) vom Schlachtkörper (11) entfernt und eingelesen oder eingegeben wird. Der Schlachtkörper (11) wird dann mit wenigstens einem Schlachtkörper-Etikett (12) versehen. Die Erfindung schlägt nun vor, dass ein Schlachtkörper-Code (13) generiert wird, welcher über eine Datenbank mit dem Erkennungselement (20) bzw. der Kennung (21) des ursprünglichen Tieres (10) und/oder der Schlachtnummer (14) verbunden ist. Der Schlachtkörper-Code (10) kann diese Daten auch beinhalten oder mit diesem identisch sein. Der Schlachtkörper-Code (13) wird auf das Schlachtkörper-Etikett (12) aufgebracht, insbesondere in Form eines Barcodes (15).

## Beschreibung

Die Erfindung betrifft ein Verfahren zur Rückverfolgung der Herkunft von Fleischwaren. Dies wird immer wichtiger, da Verbraucher, die Fleischwaren kaufen, immer häufiger wissen möchten, woher diese stammen. Insbesondere im Hinblick auf verschiedene Lebensmittelskandale und Viehkrankheiten, aber auch in Bezug auf Regionalität wird dieses Wissen immer wichtiger. Daher ist es wichtig, dies für den Verbraucher möglichst transparent und nachvollziehbar zu gestalten. Bisher wurde auf Fleischverpackungen meist nur das Herkunftsland angegeben. Eine Rückverfolgbarkeit bis hin zu einzelnen Regionen, Orten oder sogar Erzeugern ist mit den herkömmlichen Verfahren nicht möglich. Die an den zu schlachtenden Tieren vorhandenen Erkennungselemente bzw. Kennungen werden nur bis zu der neutralen, mit der Bewertung des Schlachtkörpers beauftragten Person verwendet. Weitere Rückschlüsse auf die Herkunft des Tieres können nicht gezogen werden.

Aufgabe der Erfindung ist es daher, diese Lücke zu schließen und ein Verfahren zu entwickeln, bei welchem angebotene Fleischwaren, insbesondere in Selbstbedienungsbereichen, von einem interessierten Verbraucher bis zu seinem Ursprung zurückverfolgt werden können. Dies wird durch die kennzeichnenden Merkmale von Anspruch 1 gelöst, denen folgende besondere Bedeutung zukommt. Beim Erstellen des Schlachtkörper-Etiketts wird ein Schlachtkörper-Code generiert, welcher über eine Datenbank mit dem Erkennungselement bzw. der Kennung des ursprünglichen Tieres und/oder der Schlachtnummer verbunden ist oder mit diesen identisch ist oder diese beinhaltet. Der Schlachtkörper-Code wird dann auf das Schlachtkörper-Etikett aufgebracht, insbesondere in Form eines optoelektrischen Codes wie eines Barcodes oder eines anderen durch Lesegeräte abrufbaren Codes. Die Schlachtkörper-Etiketten werden üblicherweise an der Stelle auf den Schlachtkörper aufgebracht, an der ein unabhängiger Begutachter das Gewicht und die Qualität des Schlachtkörpers überprüft, um daraus den zu zahlenden Betrag an den Bauern oder Züchter von dem das Tier stammt, zu berechnen. Daher ist es wichtig, dass diese Person sowohl vom Schlachthof als auch vom Bauern unabhängig ist und auch keine Kenntnisse über den genauen Herkunftsort, Bauernhof, Züchter oder Ähnliches hat, von dem das Tier stammt, um neutral bleiben zu können. Durch die Generierung des Schlachtkörper-Codes kann dies gewährleistet werden. Selbst wenn die Kennung in dem Schlachtkörper-Code enthalten ist oder auf dem Schlachtkörper-Etikett gedruckt wird, ist es für die unabhängige mit der Bewertung beauftragte Person nicht ersichtlich, woher das Tier genau stammt.

In einem bevorzugten Ausführungsbeispiel erfolgt eine Abfrage mittels einer Datenbank über den Lieferanten des Tieres, also den Bauern oder Züchter. Diese Abfrage stellt fest, ob der Lieferant mit der Weitergabe seines Namens und/oder seiner Adresse, insbesondere an Endverbraucher der Fleischwaren, einverstanden ist. In Abhängigkeit von diesem Abfrageergebnis kann dann auf das Schlachtkörper-Etikett eine entsprechende Markierung aufgebracht werden oder ein abweichender Schlachtkörper-Code aus dem ersichtlich ist, ob der Name bzw. die Adresse weitergegeben werden dürfen. Ist der Lieferant nicht mit der Weitergabe seiner Daten einverstanden, so dürfen diese Daten dem Endverbraucher nicht zur Verfügung gestellt werden.

An der Zerlegestelle, an der der Schlachtkörper in Fleischteile zerlegt wird, wird der Schlachtkörper-Code eingelesen und auf die einzelnen Fleischteile mittelbar oder unmittelbar ein Zerlege-Etikett mit einem Zerlege-Code aufgebracht. Dieser Zerlege-Code kann beispielsweise über eine Datenbank einen Rückschluss auf den Schlachtkörper-Code und/oder das Erkennungselement bzw. die Kennung des Tieres bieten. Es ist auch möglich, dass der Zerlege-Code den Schlachtkörper-Code und/oder die Kennung beinhaltet oder mit diesen identisch ist. Wichtig ist, dass vom Zerlege-Code ein Rückschluss auf die Herkunft des Tieres ermöglicht wird.

Bevorzugterweise werden die Fleischteile dann vakuumiert und in Satten oder Transportboxen gegeben. Insbesondere an der Außenseite der Satte oder Transportbox kann dann ein Satten-Etikett mit einem Satten-Code angebracht werden. Auch dieser Satten-Code kann dann insbesondere über eine Datenbank mit dem Zerlege-Code und/oder dem Schlachtkörper-Code bzw. dem Erkennungselement oder der Kennung in Verbindung gebracht werden. Genauso ist es natürlich auch möglich, den Satten-Code mit einem dieser vorgenannten Codes oder der Kennung identisch zu gestalten. So kann der Inhalt jeder Satte bereits von außen identifiziert werden.

Des Weiteren werden die Fleischteile an einer Waage gewogen. Wurden die Fleischteile vorher vakuumiert, werden sie vorher ausgepackt. Nach dem Wiegen werden die Fleischteile in ein Transportgefäß verbracht, insbesondere in Form eines Drahtkorbs. Dieser Drahtkorb weist einen eigenen individuellen Drahtkorb-Code auf, der insbesondere als 2D-Code gestaltet ist. Der Zerlege-Code oder der Satten-Code sowie der Drahtkorb-Code werden eingelesen und in einer Datenbank miteinander verknüpft. Der mit den Fleischteilen bestückte Drahtkorb wird dann in einen Froster verbracht, der die Fleischteile vorzugsweise bei -50°C eine kurze Zeit, beispielsweise 7 bis 11 Minuten angefrostet. Dieses Anfrosten ist dann notwendig, wenn danach das Fleisch weiter zugeschnitten werden soll. Wenn die Oberfläche der Fleischteile wenige Millimeter tief angefroren ist, lässt sich das entsprechende Fleischteil einfacher zerschneiden. Daher kann in einem weiteren bevorzugten Ausführungsbeispiel das entsprechende Fleischteil dann mittels einer Maschine in einzelne Fleischstücke zerkleinert werden. Die Fleischstücke werden danach wieder in das gleiche Transportgefäß bzw. den gleichen Drahtkorb gegeben, in dem die Fleischteile zur Maschine gebracht wurden. Ein neues Einscannen des Drahtkorb-Codes ist hier nicht erforderlich, da sich immer noch das gleiche Fleisch in dem gleichen Drahtkorb befindet.

In einem nächsten Verfahrensschritt wird dann der Drahtkorb-Code ausgelesen und die Fleischstücke in einzelne Schalen portioniert. Dies geschieht vorzugsweise nach Gewicht, um möglichst ähnliche Portionsgrößen für den Endverbraucher herzustellen. Selbstverständlich ist es auch möglich verschiedene Portionsgrößen vorzusehen, welche dann mit einem entsprechenden Etikett und einem größen- und insbesondere gewichtsabhängigen Preis ausgezeichnet werden. Die einzelnen Portionen werden dann in Schalen gegeben, die jeweils einen eigenen Schalen-Code aufweisen. Durch Einscannen dieses Schalen-Codes wird dieser mit dem Drahtkorb-Code und/oder dem Zerlege-Code und/oder dem Schlachtkörper-Code und/oder dem Erkennungselement bzw. der Kennung in einer Datenbank zusammengefügt und somit in Verbindung gebracht.

Bei einem besonders bevorzugten Ausführungsbeispiel ist nach der Portionierung der Fleischstücke in Schalen eine Freigabe vorgesehen. Diese liest den an der Schale befindlichen Schalen-Code ein und überprüft nochmals das Gewicht der Schale. Letzteres wird nur dann gemacht, wenn ein festes Sollgewicht bzw. ein fester Toleranzbereich des Gewichts der Fleischstücke vorgegeben ist. Ist der Schalen-Code lesbar und liegt das Gewicht im Toleranzbereich, wird die betreffende Schale weitergeleitet. Ist eine von diesen Eigenschaften jedoch nicht gegeben, so wird die Schale ausgeschleust und einer zusätzlichen Kontrolle bzw. Korrektur unterzogen, wo beispielsweise zusätzliche Fleischstücke hinzugefügt werden, wenn das Gewicht zu gering ist, oder auch die Fleischstücke in eine andere Schale umgepackt werden oder ein neuer Schalen-Code auf die Schale aufgebracht wird, wenn der Schalen-Code nicht lesbar ist.

Sollen Fleischstücke mit einem Sollgewicht abgepackt werden, so kann bei diesem bevorzugten Ausführungsbeispiel eine weitere Kontrolle stattfinden. Die vom Froster bzw. von der Maschine kommenden Fleischstücke werden gesamt gewogen, so dass das Gesamtgewicht ermittelt wird. Aufgrund der Sollwertvorgabe für das Gewicht der einzelnen Schale kann daraus dann automatisch die Anzahl der möglichen Schalen berechnet werden. Versucht eine Bedienperson eine weitere Schale zu nehmen und mit diesem Zerlege-Code und/oder Schlachtkörper-Code und/oder Erkennungselement bzw. der Kennung zu verknüpfen, wird automatisch festgestellt, dass ein Fehler vorliegt und sämtliche diesem Zerlege-Code und/oder Schlachtkörper-Code und/oder Erkennungselement bzw. dieser Kennung zugeordnete Schalen werden ausgeschleust, so dass bei einer nachträglichen Kontrolle die Gewichte sämtlicher Schalen überprüft werden können. Die Schalen können nach der Überprüfung, wenn eventuelle Probleme behoben wurden, dem weiteren Verfahren wieder zugegeben werden.

Durch die beschriebenen Freigabemechanismen ergibt sich eine zusätzliche Qualitätskontrolle, so dass bei der abschließenden Qualitätskontrolle weniger Fehler auftreten. Die ist insbesondere interessant, da die Schalen bei der hier beschriebenen Freigabe noch unverschlossen sind, so dass es relativ einfach ist, noch Fleischstücke zuzugeben oder die Fleischstücke in eine andere Schale zu transferieren. Auch kann so verhindert werden, dass Fleischstücke mit unterschiedlichen Zerlege-Codes und/oder Schlachtkörper-Codes und/oder Erkennungselementen bzw. der Kennungen versehentlich vermischt werden, worunter die Rückverfolgbarkeit leidet.

Die einzelnen Schalen können dann verschweißt oder anderweitig verschlossen werden. Dies ist vorteilhaft, wenn diese Schalen in den Verkauf an den Endverbraucher gehen. Durch das Verschweißen oder Verschließen sind die in den Schalen befindlichen Produkte vor Verunreinigungen geschützt und es kann auch kein Produkt im weiteren Verfahren verloren gehen. An der Außenseite jeder Schale wird dann ein Verbraucher-Etikett angeordnet, auf welchem ein Verbraucher-Code befindlich ist. Dieser kann insbesondere als Barcode, 2D-Code, QR-Code oder Ähnliches ausgebildet sein. Dieser Verbraucher-Code wird mit den in der Datenbank gespeicherten Daten, insbesondere den anderen Codes und/oder dem Erkennungselement bzw. der Kennung des Tieres verknüpft. Der Verbraucher-Code ist individuell für jedes einzelne Tier bzw. jedes Erkennungselement oder jede Kennung unterschiedlich.

Trifft jetzt der Verbraucher an der Verkaufsstelle auf das in den Schalen mit Verbraucher-Code versehene Produkt, kann er über ein mobiles Gerät, wie ein Mobiltelefon, ein Smartphone, einen Tablet-PC oder Ähnliches diesen Code auslesen und dadurch über eine Internetverbindung Informationen über die Herkunft des Tieres, von dem das in der Schale befindliche Fleisch stammt, abrufen. Als Informationen sind beispielsweise die Region der Aufzucht, der genaue Bauernhof, die Zuchtstelle, das Alter, die Fütterung, das Geschlecht, die Rasse oder Ähnliches denkbar. Hierdurch wird die Herkunft des Fleisches für den Verbraucher auf einfache Weise deutlich. Es ist ihm sogar möglich, den genauen Ort oder den einzelnen Bauernhof zu identifizieren, von dem das Tier stammt. Ggf. kann ihm sogar die Lage des Bauernhofs bzw. des Ortes auf einer Karte angezeigt werden. Der Verbraucher kann dann auf Grundlage dieser Informationen entscheiden, ob er das betreffende Fleisch kaufen möchte.

Vorteilhafterweise ist nach dem Bestücken und Schließen der Schalen eine abschließende Qualitätskontrolle vorgesehen. In dieser können verschiedene Parameter überprüft werden, beispielsweise das Gewicht der Schale, das Vorhandensein von Metall in der Schale, die Lesbarkeit des Verbraucher-Codes oder Ähnliches. Ob sich unerwünschte Metallverunreinigungen in der Schale befinden wird üblicherweise über einen Metalldetektor überprüft. Das genaue Gewicht der Schale bzw. der Einwaage der Schale werden über eine Eichwaage bestimmt. Hierbei ergeben sich mehrere Möglichkeiten. Ein Etikett mit dem genauen Gewicht und dem Verkaufspreis kann nach der Überprüfung des Gewichts auf der Eichwaage auf der Schale angebracht werden oder es ist eine Soll-Einwaage vorgesehen, die eingehalten werden muss und alle Schalen erhalten das gleiche Etikett bezüglich des Verkaufspreises bzw. der Einwaage. Diese Etiketten können identisch sein mit dem Verbraucher-Etikett oder auch zusätzlich angebracht werden. Es ist auch möglich, das Verbraucher-Etikett grundsätzlich erst nach dem Durchlaufen des Metalldetektors anzubringen. Bevor die Schale mit dem Verbraucher-Etikett in den Handel geht, sollte noch überprüft werden, ob der Verbraucher-Code auch gut lesbar ist oder ob Fehler beim Drucken, Verunreinigungen oder Ähnliches aufgetreten sind und das Verbraucher-Etikett so unlesbar machen. Hierzu kann eine Verbraucher-Code Überprüfung vorgesehen sein.

Bevor die Schale dann in den Versand geht, kann noch der Schalen-Code über einen Schalen-Code Leser ausgelesen werden, um genau festzuhalten, welche Fleischteile von welchem Tier verkaufsfertig verpackt sind bzw. in den Versand gehen. Dies fördert noch die Nachvollziehbarkeit des Verbleibs der einzelnen Fleischteile von jedem Tier im eigenen Betrieb.

Der Schlachtkörper-Code, die Kennung, der Satten-Code, der Drahtkorb-Code und der Verbraucher-Code werden hier im Weiteren als "Code" bezeichnet. Diese Codes können unterschiedlich ausgestaltet sein. So können beispielsweise gedruckte Codes Verwendung finden, insbesondere in Form von Barcodes, 2D-Codes und QR-Codes. Für verschiedene Anwendungsfälle können auch verschiedene Codetypen Verwendung finden. Des Weiteren ist es möglich, elektronische Codes für gewisse Anwendungsfälle vorzusehen. Diese sind dann vorzugsweise auf Transpondern wie RIFD-Tags gespeichert, die dann über entsprechende Lesegeräte automatisiert auslesbar sind. Auch gedruckte Codes können über entsprechende Lesegeräte oder Lesestellen manuell oder automatisiert ausgelesen werden. Die individuelle Kennung des Erkennungselementes des Tieres kann in allen oder einigen der übrigen Codes mit umfasst sein. Hierdurch ist eine Zuordnung zu dem einzelnen Tier besonders einfach gegeben.

Weitere Vorteile und Ausführungsbeispiele der Erfindung ergeben sich aus der nachfolgenden Beschreibung, den Unteransprüchen sowie den Zeichnungen. In den Figuren sind einige Verfahrenabläufe der Erfindung sowie einige Etiketten beispielhaft dargestellt. Es zeigen:
- Fig. 1:: Den Verfahrensablauf von der Anlieferung des Tieres bis zum Verbringen der Schlachtkörper in die Kühlung.
- Fig. 2:: Das Wiegen der Fleischteile und Verbringen in einen Drahtkorb und dann in einen Froster.
- Fig. 3:: Das Zerteilen der Fleischteile in Fleischstücke sowie das portionierte Abpacken der Fleischstücke in die Schalen.
- Fig. 4:: Die abschließende Qualitätskontrolle der Schalen.
- Fig. 5:: Ein Beispiel eines Schlachtkörper-Etiketts.
- Fig. 6:: Ein Beispiel eines Zerlege-Etiketts.
- Fig. 7:: Ein Beispiel eines Verbraucher-Etiketts.

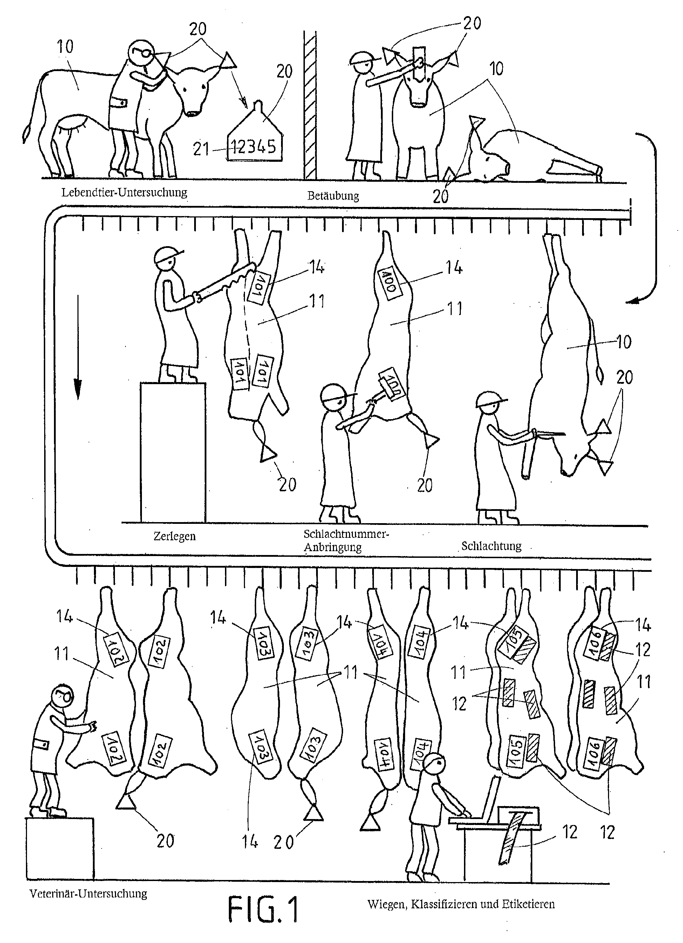

Fig. 1 zeigt den Verfahrenablauf von der Anlieferung eines Tieres 10 bis zum Überbringen der Schlachtkörper 11 in eine Kühlung. Das Tier 10 ist mit zwei Erkennungselementen 20 ausgestattet, hier mit Ohrmarken. Jedes Erkennungselement 20 weist eine individuelle Kennung 21 auf, die hier nur kursorisch dargestellt ist. Als Tier 10 ist hier eine Kuh vorgesehen. Es ist selbstverständlich möglich das Verfahren mit unterschiedlichen Tieren 10 durchzuführen. Das Verfahren kann sowohl mit vierbeinigen Tieren 10, wie Kühen Schweinen, Schafen, Ziegen, Lämmern, Kälbern und anderen durchgeführt werden, aber auch mit zweibeinigen Tieren wie Hähnchen, Puten, Enten, Gänsen und Ähnlichem. Während bei Säugetieren häufig eine Ohrmarke als Erkennungselement 20 dient, wird bei Geflügel eher ein Fußring vorgesehen. Aber auch andere Formen von Erkennungselementen 20 sind denkbar.

Das angelieferte Tier 10 wird untersucht, identifiziert und betäubt. Das Tier wird dann geschlachtet und die Haut des Tieres 10 wird entfernt. Auf den dadurch entstehenden Schlachtkörper 11 wird dann die Schlachtnummer 14, üblicherweise durch Stempeln, aufgebracht. Hierbei verbleibt das Erkennungselement 20 immer noch am Schlachtkörper 11. Der Schlachtkörper 11 wird dann durchgesägt und von einem Veterinär untersucht. Danach wird der Schlachtkörper 11 zu einem unabhängigen Begutachter gebracht, der den Schlachtkörper 11 wiegt und klassifiziert. Anhand dieses Wiege- und Klassifizierungsergebnisses wird der Lieferant des Tieres 10, also üblicherweise ein Bauer oder Züchter, bezahlt. Daher ist es wichtig, dass der Beobachter keine Kenntnisse darüber hat, von welchem Bauern bzw. Lieferanten das Tier 10 stammt. Der Beobachter entfernt das Erkennungselement 20 und druckt Schlachtkörper-Etiketten 12 aus. Diese werden auf dem Schlachtkörper 11 angebracht. Jedes Schlachtkörper-Etikett 12 umfasst einen Schlachtkörper-Code 13, der hier nicht näher gezeigt ist. Die etikettierten Schlachtkörper 11 werden dann einer Kühlung zugeführt.

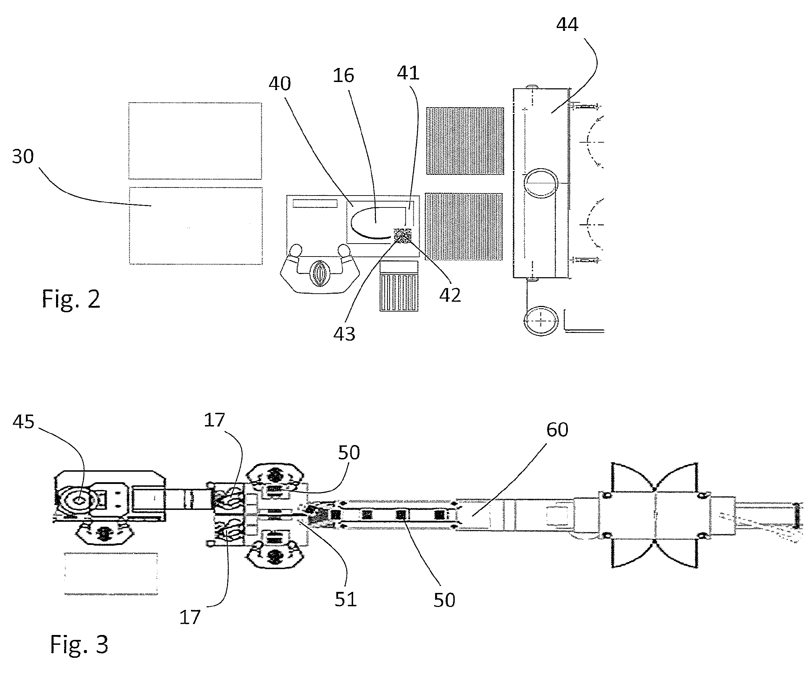

Nach dem Zerlegen der Schlachtkörper 11 in Fleischteile 16 werden diese, insbesondere in einer Satte 30 an eine Wiegestation gebracht, wie in Fig. 2 gezeigt. Das einzelne Fleischteil 16 wird dabei der Satte 30 entnommen und auf eine Waage 40 verbracht. Der an der Außenseite der Satte 30 befindliche Satten-Code bzw. der auf dem Fleischteil 16 bzw. dessen Verpackung befindliche Zerlege-Code 32 werden dabei von einer Bedienperson eingelesen. Das Fleischteil 16 wird dann in einen Drahtkorb 41 verbracht, welcher mit einem Drahtkorb-Code 42 versehen ist. Dieser ist insbesondere als 2D-Code 43 ausgestaltet. Das Fleischteil 16 wird dann mit dem Drahtkorb 41 in einen Froster 44 geleitet, in welchen vorzugsweise das Fleischteil 16 bei -50°C für 7 bis 11 Minuten gegeben wird, damit die Oberfläche anfrieren kann.

Fig. 3 zeigt nun den Fortgang des Verfahrens nachdem das Fleischteil 16 den Froster 44 passiert hat. Eine Bedienperson führt das Fleischteil 16 einer Maschine 45 zu, welche in diesem Ausführungsbeispiel einzelne Fleischstücke 17 aus dem Fleischteil 16 schneidet. Danach werden die Fleischstücke 17 wieder in den gleichen Drahtkorb 41 gegeben, in welchem bereits der Fleischteil 16 zur Maschine 45 gebracht wurde. Hierdurch ist ein erneutes Einscannen des Drahtkorb-Codes 42 oder eines anderen Codes an dieser Stelle nicht notwendig. Danach werden die Fleischstücke 17 portioniert und in einzelne Schalen 50 verbracht. Dies geschieht hier manuell. Diese Schalen 50 verfügen über einen Schalen-Code, welcher an dem Schalen-Code Scanner 51 ausgelesen wird. Wenn eine Bedienperson mit dem portionieren der Fleischstücke 17 aus einem Drahtkorb 41 beginnt, wird zuerst der Drahtkorb-Code 41 eingelesen. So ist der Datenbank klar, dass die dann bestückten Schalen 50 Fleischstücke 17 aus diesem Drahtkorb 41 umfassen. So kann wieder die Verbindung zwischen dem Drahtkorb-Code 42 und/oder dem Satten-Code und/oder dem Zerlege-Code 32 und/oder dem Schlachtkörper-Code 13 und/oder dem Erkennungselement 20 bzw. der Kennung 21 und dem Schalen-Code der Schale 50 über die Datenbank hergestellt werden.

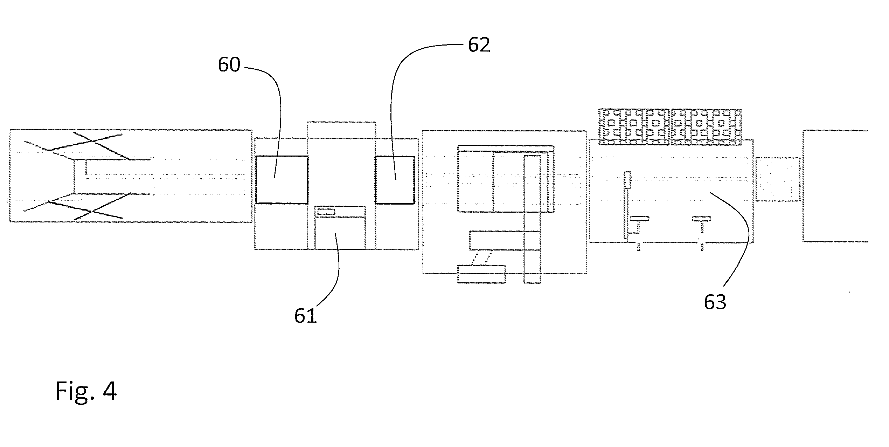

Fig. 4 zeigt eine mögliche Anordnung einer abschließenden Qualitätskontrolle der einzelnen Schalen 50. Jede Schale 50 passiert dabei einen Metalldetektor 60, um unerwünschte metallische Verunreinigungen zu entdecken. Danach wird die Schale 50 einer Eichwaage 61 übergeben, welche das genaue Gewicht der Schale 50 bestimmt. Schließlich wird der Schalen-Code am Schalen-Code Leser 62 ausgelesen. Zum Schluss wird an der Verbraucher-Code Überprüfung 63 noch festgestellt, ob der Verbraucher-Code 53 lesbar ist. Wenn eine Schale 50 bei einer dieser Stationen nicht die erforderlichen Anforderungen erfüllt oder wenn beim Metalldetektor 60 Metall detektiert wurde, wird die Schale 50 aus dem weiteren Verfahren ausgeschleust. Sie kann dann einer zusätzlichen Kontrolle zugeführt werden, um die Probleme möglichst zu beheben. Danach kann die Schale 50 wieder dem Prozess zugeführt werden, so dass Abfälle möglichst vermieden werden. Selbstverständlich ist eine andere Reihenfolge der Anordnung der verschiedenen Stationen der Qualitätskontrolle möglich. So können beispielsweise die Schalen 50 erst gewogen werden bevor sie dem Metalldetektor 60 zugeführt werden.

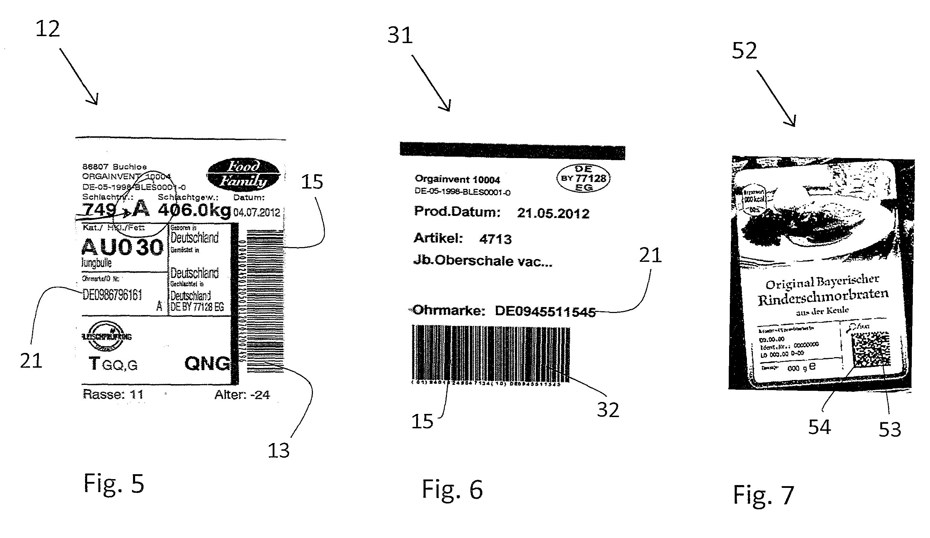

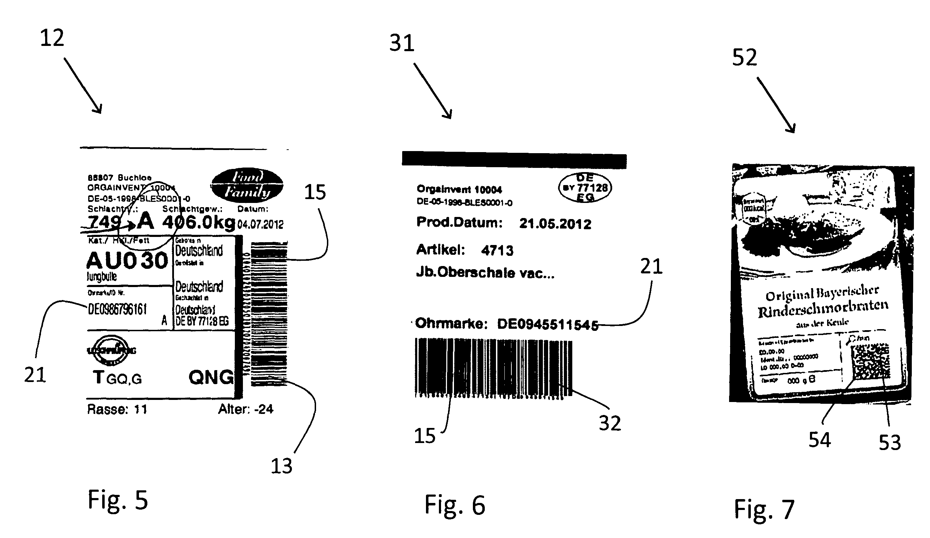

Die Fig. 5 bis 7 zeigen beispielhafte Verwirklichungen von verschiedenen Etiketten. Fig. 5 zeigt ein Beispiel für ein Schlachtkörper-Etikett 12. Das Schlachtgewicht des Tieres 10 ist darauf vermerkt, genauso wie die Schlachtnummer 14 und/oder die Ohrmarkennummer, die als Kennung 21 des Erkennungselements 20, hier also einer Ohrmarke, dient. Die Schlachtnummer 14 und/oder die Kennung 21 ist auch in dem als Barcode 15 ausgeführten Schlachtkörper-Code 13 enthalten. Es können somit schnell Rückschlüsse auf das einzelne Tier 10 gezogen werden, indem man den Schlachtkörper-Code 13 ausliest.

Fig. 6 zeigt eine beispielhafte Verwirklichung eines Zerlege-Etiketts 31. Dieses kann auch als Satten-Etikett dienen. In diesem Fall wird es auf einem einzelnen Fleischteil 16 bzw. dessen vakuumierter Verpackung angebracht. Auch auf diesem Zerlege-Etikett 31 erkennt man wieder die Schlachtnummer 14 und/oder die Kennung 21 des Erkennungselements 20, also der Ohrmarke. Die Kennung 21 und/oder die Schlachtnummer 14 ist auch hier im Zerlege-Code 32 oder auch im Satten-Code enthalten, der auch hier wieder ein Barcode 15 ist.

Das in Fig. 7 dargestellte Verbraucher-Etikett 52 umfasst den Verbraucher-Code 53. Dieser ist hier als QR-Code 54 dargestellt. Solche QR-Codes 54 können von vielen Smartphones und Tablet-PCs oder auch anderen Lesegeräten ausgelesen werden. Viele Verbraucher verfügen heutzutage über derartige Geräte und führen diese auch häufig bei sich. Darüber hinaus sind diese Verbraucher auch oft dazu in der Lage, mit dem entsprechenden Gerät eine Internet-Verbindung herzustellen. Der Verbraucher kann dann über die Internetverbindung direkt erfahren, aus welchem Ort bzw. von welchem Bauernhof das Tier 10 stammt, dessen Fleisch in der Schale 50 angeboten wird bzw. auch noch weitere Informationen über Haltung, Alter, Rasse, Geschlecht, Fütterung und Ähnliches des Tieres 10 erhalten. Auch ein Mindesthaltbarkeitsdatum des Fleisches kann angegeben werden. So ist der Verbraucher gut informiert über die Quelle des Fleisches, so dass ein größeres Vertrauen des Endverbrauchers zu der Verkaufsstelle, die das Fleisch anbietet, geschaffen wird.

### Bezugszeichenliste:

- 10: Tier
- 11: Schlachtkörper
- 12: Schlachtkörper-Etikett
- 13: Schlachtkörper-Code
- 14: Schlachtnummer
- 15: Barcode
- 16: Fleischteil
- 17: Fleischstücke
- 20: Erkennungselement
- 21: Kennung
- 30: Satte
- 31: Zerlege-Etikett
- 32: Zerlege-Code
- 40: Waage
- 41: Drahtkorb
- 42: Drahtkorb-Code
- 43: 2D-Code
- 44: Froster
- 45: Maschine
- 50: Schale
- 51: Schalen-Code Scanner
- 52: Verbraucher-Etikett
- 53: Verbraucher-Code
- 54: QR-Code
- 60: Metalldetektor
- 61: Eichwaage
- 62: Schalen-Code Leser
- 63: Verbraucher-Code Überprüfung

## Patentansprüche

1. Verfahren zur Rückverfolgung der Herkunft von Fleischwaren,
wobei jedes zu verarbeitende Tier (10) wenigstens ein individuelles Erkennungselement (20), wie eine Ohrmarke, einen Fußring o.ä. mit einer individuellen Kennung (21) aufweist, über welches das einzelne Tier (10) identifizierbar ist,
wobei dann das Tier (10) geschlachtet wird, wodurch wenigstens ein Schlachtkörper (11) entsteht, der mit einer Schlachtnummer (14) versehen wird,
wobei der Schlachtkörper (11) nach dem Schlachtvorgang gewogen und/oder klassifiziert wird wobei das Erkennungselement (20) vom Schlachtkörper (11) entfernt und eingelesen oder eingegeben wird
und wobei dann der Schlachtkörper (11) mit wenigstens einem Schlachtkörper-Etikett (12) versehen wird,
**dadurch gekennzeichnet,**
**dass** ein Schlachtkörper-Code (13) generiert wird, welcher über eine Datenbank mit dem Erkennungselement (20) bzw. der Kennung (21) des ursprünglichen Tiers (10) und/oder der Schlachtnummer (14) verbunden ist oder mit diesen identisch ist oder diese beinhaltet,
wobei dieser Schlachtkörper-Code (13) auf das Schlachtkörper-Etikett (12) aufgebracht wird, insbesondere in Form eines Barcodes (15).

2. Verfahren nach Anspruch 1, **dadurch gekennzeichnet, dass** eine Abfrage über eine Datenbank erfolgt die feststellt, ob der Lieferant, also der Bauer oder Züchter des Tieres (10) mit der Weitergabe seines Namens und/oder seiner Adresse insbesondere an Verbraucher der Fleischwaren einverstanden ist und dass, in Abhängigkeit vom Abfrageergebnis, ein unterschiedlicher Schlachtkörper-Code (13) oder eine sonstige Markierung auf das Schlachtkörper-Etikett (12) aufgebracht werden.

3. Verfahren nach einem der Ansprüche 1 oder 2, **dadurch gekennzeichnet, dass** vor oder bei dem Zerlegen des Schlachtkörpers (11) in Fleischteile (16) der Schlachtkörper-Code (13) eingelesen wird und auf die Fleischteile (16) mittelbar oder unmittelbar ein Zerlege-Etikett (31) mit einem Zerlege-Code (32) aufgebracht wird, welcher insbesondere über eine Datenbank einen Rückschluss auf den Schlachtkörper-Code (13) und/oder das Erkennungselement (20) bzw. die Kennung (21) erlaubt oder mit einem oder mehreren von diesen identisch ist.

4. Verfahren nach Anspruch 3, **dadurch gekennzeichnet, dass** die Fleischteile (16) vakuumiert und in Satten (30) oder Transportboxen gegeben werden, wobei an der Außenseite der Satte (30) oder Transportbox wenigstens ein Satten-Etikett mit einem Satten-Code angebracht wird, welcher, insbesondere über eine Datenbank, einen Rückschluss auf den Zerlege-Code (32) und/oder den Schlachtkörper-Code (13) und/oder das Erkennungselement (20) bzw. die Kennung (21) erlaubt oder mit einem oder mehreren von diesen identisch ist.

5. Verfahren nach einem der Ansprüche 3 oder 4, **dadurch gekennzeichnet, dass** die Fleischteile (16) an einer Waage (40) gewogen werden wobei sie vorher ggf. ausgepackt werden,
dass die Fleischteile (16) dann in ein Transportgefäß gebracht werden, insbesondere in Form eines Drahtkorbs (41), welcher mit einem eigenen individuellen Drahtkorb-Code (42), insbesondere einem 2D-Code (43) versehen ist, wobei der Zerlege-Code (32) und/oder der Satten-Code sowie der Drahtkorb-Code eingelesen und in einer Datenbank miteinander verknüpft werden
und dass der bestückte Drahtkorb (41) in einen Froster (44) bei vorzugsweise -50°C für insbesondere ca. 7 bis 11 Minuten eingebracht wird.

6. Verfahren nach Anspruch 5, **dadurch gekennzeichnet, dass** die Fleischteile (16) vorzugsweise mittels einer Maschine (45) in Fleischstücke (17) zerkleinert wird, wobei diese danach wieder in das gleiche Transportgefäß bzw. den gleichen Drahtkorb (41) gegeben werden, in dem die Fleischteile (16) zur Maschine (45) gebracht wurden.

7. Verfahren nach Anspruch 6, **dadurch gekennzeichnet, dass** der Drahtkorb-Code (42) ausgelesen wird und dann die Fleischstücke (17) in einzelne Schalen (50) vorzugsweise nach Gewicht portioniert werden, wobei jede Schale (50) einen eigenen Schalen-Code aufweist und dass dieser Schalen-Code mit dem Drahtkorb-Code (42) und/oder Zerlege-Code (32) und/oder dem Schlachtkörper-Code (13) und/oder dem Erkennungselement (20) bzw. der Kennung (21) in einer Datenbank zusammen geführt wird.

8. Verfahren nach Anspruch 7, **dadurch gekennzeichnet, dass** die einzelnen Schalen (50) verschweißt oder anderweitig verschlossen werden und dass an der Außenseite jeder Schale (50) ein Verbraucher-Etikett (52) angeordnet wird, auf welchem ein individueller Verbraucher-Code (53), insbesondere ein Barcode, 2D-Code, QR-Code (54) o.ä., befindlich ist, welcher mit den in der Datenbank gespeicherten Daten, insbesondere dem Erkennungselement (20) bzw. der Kennung (21) verknüpft ist,
wobei der Verbraucher-Code dann von einem Verbraucher an der Verkaufsstelle ausgelesen werden kann, insbesondere über ein mobiles Gerät wie ein Mobiltelefon, Smartphone, Tablet-PC o.ä., und über welchen der Verbraucher dann, vorzugsweise über eine Internet-Verbindung, nähere Informationen über die Herkunft des Tieres (10), von dem das in der Schale (50) befindliche Fleisch stammt, erhält, wie Region der Aufzucht, den genauen Bauernhof, die Zuchtstelle, das Alter, die Fütterung, das Geschlecht, die Rasse o.ä.

9. Verfahren nach einem der Ansprüche 1 bis 8, **dadurch gekennzeichnet, dass** nach dem Bestücken und Schließen der Schalen (50) eine abschließende Qualitätskontrolle durchgeführt wird, in der eine oder mehrere der folgenden Parameter überprüft werden: Gewicht der Schale (50) über eine Eichwaage (61), Vorhandensein von Metall über einen Metalldetektor (60), Lesbarkeit des Verbraucher-Codes (53) über eine Überprüfung (Verbraucher-Code Überprüfung 63) o.ä.
und dass bei Feststellung eines Fehlers in wenigstens einem Parameter die Schale (50) ausgeworfen und einer zusätzlichen Kontrolle zugeführt wird.

10. Verfahren nach einem der Ansprüche 6 bis 9, **dadurch gekennzeichnet, dass** nach der Durchführung der vorgenannten Verfahrensschritte der Schalen-Code über einen Schalen-Code-Leser (62) ausgelesen wird, um festzuhalten welche Fleischteile (16) von welchem Tier (10) verkaufsfertig verpackt sind bzw. in den Warenversand gehen.

11. Verfahren nach einem der Ansprüche 1 bis 10, **dadurch gekennzeichnet, dass** als Codes (13, 32, 42, 53) gedruckte Codes Verwendung finden, insbesondere Barcodes (15), 2D-Codes (43) oder QR-Codes (54).

12. Verfahren nach einem der Ansprüche 1 bis 11, **dadurch gekennzeichnet, dass** als Codes (13, 32, 42, 53) elektronische Codes Verwendung finden, insbesondere auf Transpondern wie RFID-Tags, die über entsprechende Lesegeräte automatisiert auslesbar sind.

13. Verfahren nach einem der Ansprüche 1 bis 12, **dadurch gekennzeichnet, dass** alle oder einige der Codes (13, 32, 42, 53) die individuelle Kennung (21) des Erkennungselements (20) umfassen.

## Geänderte Patentansprüche

### Geänderte Patentansprüche gemäss Regel 137(2) EPÜ.

**1.** Verfahren zur Rückverfolgung der Herkunft von Fleischwaren,
wobei jedes zu verarbeitende Tier (10) wenigstens ein individuelles Erkennungselement (20), wie eine Ohrmarke, einen Fußring o.ä. mit einer individuellen Kennung (21) aufweist, über welches das einzelne Tier (10) identifizierbar ist,
wobei dann das Tier (10) geschlachtet wird, wodurch wenigstens ein Schlachtkörper (11) entsteht, der mit einer Schlachtnummer (14) versehen wird,
wobei der Schlachtkörper (11) nach dem Schlachtvorgang gewogen und/oder klassifiziert wird wobei das Erkennungselement (20) vom Schlachtkörper (11) entfernt und eingelesen oder eingegeben wird
und wobei dann der Schlachtkörper (11) mit wenigstens einem Schlachtkörper-Etikett (12) versehen wird,
**dadurch gekennzeichnet,**
**dass** ein Schlachtkörper-Code (13) generiert wird, welcher über eine Datenbank mit dem Erkennungselement (20) bzw. der Kennung (21) des ursprünglichen Tiers (10) und/oder der Schlachtnummer (14) verbunden ist oder mit diesen identisch ist oder diese beinhaltet,
wobei dieser Schlachtkörper-Code (13) auf das Schlachtkörper-Etikett (12) aufgebracht wird, insbesondere in Form eines Barcodes (15)
**dass** vor oder bei dem Zerlegen des Schlachtkörpers (11) in Fleischteile (16) der Schlachtkörper-Code (13) eingelesen wird und auf die Fleischteile (16) mittelbar oder unmittelbar ein Zerlege-Etikett (31) mit einem Zerlege-Code (32) aufgebracht wird, welcher insbesondere über eine Datenbank einen Rückschluss auf den Schlachtkörper-Code (13) und/oder das Erkennungselement (20) bzw. die Kennung (21) erlaubt oder mit einem oder mehreren von diesen identisch ist
**dass** die Fleischteile (16) vakuumiert und in Satten (30) oder Transportboxen gegeben werden, wobei an der Außenseite der Satte (30) oder Transportbox wenigstens ein Satten-Etikett mit einem Satten-Code angebracht wird, welcher, insbesondere über eine Datenbank, einen Rückschluss auf den Zerlege-Code (32) und/oder den Schlachtkörper-Code (13) und/oder das Erkennungselement (20) bzw. die Kennung (21) erlaubt oder mit einem oder mehreren von diesen identisch ist, so dass Rückschlüsse auf das einzelne Tier, von dem das Fleisch stammt, bzw. auf dessen Herkunft getroffen werden können.

**2.** Verfahren nach Anspruch 1, **dadurch gekennzeichnet, dass** die Fleischteile (16) an einer Waage (40) gewogen werden wobei sie vorher ggf. ausgepackt werden,
dass die Fleischteile (16) dann in ein Transportgefäß gebracht werden, insbesondere in Form eines Drahtkorbs (41), welcher mit einem eigenen individuellen Drahtkorb-Code (42), insbesondere einem 2D-Code (43) versehen ist, wobei der Zerlege-Code (32) und/oder der Satten-Code sowie der Drahtkorb-Code eingelesen und in einer Datenbank miteinander verknüpft werden
und dass der bestückte Drahtkorb (41) in einen Froster (44) bei vorzugsweise -50°C für insbesondere ca. 7 bis 11 Minuten eingebracht wird.

**3.** Verfahren nach Anspruch 2, **dadurch gekennzeichnet, dass** die Fleischteile (16) vorzugsweise mittels einer Maschine (45) in Fleischstücke (17) zerkleinert wird, wobei diese danach wieder in das gleiche Transportgefäß bzw. den gleichen Drahtkorb (41) gegeben werden, in dem die Fleischteile (16) zur Maschine (45) gebracht wurden.

**4.** Verfahren nach Anspruch 3, **dadurch gekennzeichnet, dass** der Drahtkorb-Code (42) ausgelesen wird und dann die Fleischstücke (17) in einzelne Schalen (50) vorzugsweise nach Gewicht portioniert werden, wobei jede Schale (50) einen eigenen Schalen-Code aufweist und dass dieser Schalen-Code mit dem Drahtkorb-Code (42) und/oder Zerlege-Code (32) und/oder dem Schlachtkörper-Code (13) und/oder dem Erkennungselement (20) bzw. der Kennung (21) in einer Datenbank zusammen geführt wird.

**5.** Verfahren nach Anspruch 4, **dadurch gekennzeichnet, dass** die einzelnen Schalen (50) verschweißt oder anderweitig verschlossen werden und dass an der Außenseite jeder Schale (50) ein Verbraucher-Etikett (52) angeordnet wird, auf welchem ein individueller Verbraucher-Code (53), insbesondere ein Barcode, 2D-Code, QR-Code (54) o.ä., befindlich ist, welcher mit den in der Datenbank gespeicherten Daten, insbesondere dem Erkennungselement (20) bzw. der Kennung (21) verknüpft ist,
wobei der Verbraucher-Code dann von einem Verbraucher an der Verkaufsstelle ausgelesen werden kann, insbesondere über ein mobiles Gerät wie ein Mobiltelefon, Smartphone, Tablet-PC o.ä., und über welchen der Verbraucher dann, vorzugsweise über eine Internet-Verbindung, nähere Informationen über die Herkunft des Tieres (10), von dem das in der Schale (50) befindliche Fleisch stammt, erhält, wie Region der Aufzucht, den genauen Bauernhof, die Zuchtstelle, das Alter, die Fütterung, das Geschlecht, die Rasse o.ä.

**6.** Verfahren nach einem der Ansprüche 1 bis 5, **dadurch gekennzeichnet, dass** nach dem Bestücken und Schließen der Schalen (50) eine abschließende Qualitätskontrolle durchgeführt wird, in der eine oder mehrere der folgenden Parameter überprüft werden: Gewicht der Schale (50) über eine Eichwaage (61), Vorhandensein von Metall über einen Metalldetektor (60), Lesbarkeit des Verbraucher-Codes (53) über eine Überprüfung (Verbraucher-Code Überprüfung 63) o.ä.
und dass bei Feststellung eines Fehlers in wenigstens einem Parameter die Schale (50) ausgeworfen und einer zusätzlichen Kontrolle zugeführt wird.

**7.** Verfahren nach einem der Ansprüche 3 bis 6, **dadurch gekennzeichnet, dass** nach der Durchführung der vorgenannten Verfahrensschritte der Schalen-Code über einen Schalen-Code-Leser (62) ausgelesen wird, um festzuhalten welche Fleischteile (16) von welchem Tier (10) verkaufsfertig verpackt sind bzw. in den Warenversand gehen.

**8.** Verfahren nach einem der Ansprüche 1 bis 7, **dadurch gekennzeichnet, dass** als Codes (13, 32, 42, 53) gedruckte Codes Verwendung finden, insbesondere Barcodes (15), 2D-Codes (43) oder QR-Codes (54).

**9.** Verfahren nach einem der Ansprüche 1 bis 8, **dadurch gekennzeichnet, dass** als Codes (13, 32, 42, 53) elektronische Codes Verwendung finden, insbesondere auf Transpondern wie RFID-Tags, die über entsprechende Lesegeräte automatisiert auslesbar sind.

**10.** Verfahren nach einem der Ansprüche 1 bis 9, **dadurch gekennzeichnet, dass** alle oder einige der Codes (13, 32, 42, 53) die individuelle Kennung (21) des Erkennungselements (20) umfassen.
